# EUROPEAN PATENT SPECIFICATION

(11) **EP 3 435 601 B1**
(45) Date of publication and mention of the grant of the patent: **08.04.2020**
(21) Application number: 18185617.0
(22) Date of filing: 25.07.2018
(51) Int. Cl.: H04L 12/58

(54) **CERTIFIED MESSAGING SYSTEM AND METHOD**
ZERTIFIZIERTES MESSAGING-SYSTEM UND VERFAHREN
SYSTÈME DE MESSAGERIE CERTIFIÉ ET PROCÉDÉ

(30) Priority: 25.07.2017 IT 201700085021
(43) Date of publication of application: 30.01.2019
(73) Proprietor: INFOCERT S.p.A., 00187 Roma (IT)
(72) Inventor: RUGGIERO, Alessio Antonio, 36073 CORNEDO VICENTINO (VI) (IT); MARCOLONGO, Igor, 35038 TORREGLIA (PD) (IT); PONZI, Florentina, 03100 FROSINONE (IT); VERATELLI, Alberto, 31100 TREVISO (IT)
(74) Representative: Sordini, Lorenzo

(56) References cited:
- EP-A1- 2 372 947
- GB-A- 2 473 477
- US-A1- 2008 065 880
- US-A1- 2016 191 513

## Description

### TECHNICAL FIELD OF THE INVENTION

The present invention relates to a method for certifying messages exchanged via a messaging system/service between two or more users, or between a user and an intelligent software agent, or between two intelligent software agents. Furthermore, the present invention is also related to a certified messaging system and service.

### STATE OF THE ART

As known, nowadays there are countless systems and services available that allow the exchange of messages between users via telecommunications networks, in particular the Internet and/or mobile telephone networks. Universally known examples of such messaging systems/services are the service provided by mobile phone networks commonly referred to as SMS (from the English "Short Message Service"), the e-mail service and instant messaging systems/services (e.g. WhatsApp Messenger).

All of these messaging systems/services allow the exchange of text messages; many also allow the exchange of audio and/or video messages, as well as the sending of multimedia content (such as images, photos, videos, audio, music files, links, geographical locations, electronic business cards, text documents or even other documents, etc.).

Typically, the aforementioned messaging systems/services require the use of specific software programs or applications (so-called Apps) that users must install on their electronic communication devices (such as, for example, smartphones, tablets, laptops, desktop PCs, smartTVs, smartwatches, etc.).

Some messaging systems/services are also available via web through specific web applications (so-called web apps) accessible through software programs/applications for web browsing (so-called web browsers or simply browsers).

Nowadays, messaging systems/services are also known in which so-called intelligent software agents (generally known as chatbots, talkbots, chatterbots, or simply Bots) are used able to hold intelligent conversations with humans by exchanging text messages and/or audio messages and/or audio and video messages. These intelligent software agents (hereinafter simply referred to as intelligent agents) are typically used for remote assistance purposes, for the provision of information/data automatically and also for commercial purposes.

In view of the increasing use of messaging systems/services, in recent years various technological solutions have been developed that seek to certify, more or less effectively, the exchange of messages between two users.

For example, in Italy so-called Certified Electronic Mail (PEC) is widely used to certify the sending and delivery of a message.

Examples of how the exchange of messages between two parties can take place are provided in US 2016/0191513 A1 describing methods and systems for binding a data transaction to a person's identity using biometrics. In fact, although US 2016/191513 A1 relates to a totally different subject from that of the present invention, this document describes many features known in the field of messaging, such as exchanging data in encrypted form and sending messages and corresponding digests from client devices to a server.

### OBJECT AND SUMMARY OF THE INVENTION

The Applicant has noted that nowadays there is no system/service capable of effectively certifying the exchange of messages between two or more parties, for example between two or more users, or between one or more users and one or more intelligent agents, or between two or more intelligent agents.

In particular, there is no system/service capable of effectively certifying the identity of those who exchange messages via a messaging system/service, the integrity of the content exchanged, the date and time of sending, receiving and reading messages, as well as the order of sending exchanged messages.

The Applicant thus felt the need to develop such a system/service, thereby arriving at the present invention.

Consequently, a general object of the present invention is to provide a method and a system for effectively certifying an exchange of messages between two or more parties through a messaging system, for example between two or more users, or between one or more users and one or more intelligent agents, or between two or more systems interacting with each other via intelligent agents.

In particular, a specific object of the present invention is to provide a method and a system for effectively certifying the contents (i.e., the integrity of the contents) of messages exchanged between two or more parties via a messaging system/service, as well as the exact order of the messages exchanged.

In addition, a secondary object of the present invention is to provide a method and a system for effectively certifying the identity of those who exchange messages, as well as the date and time of sending, receiving and reading messages.

These and other objects are achieved by the present invention as it relates to a method for certifying messages exchanged between two or more parties through a messaging system, as defined in the appended claims.

### BRIEF DESCRIPTION OF THE DRAWINGS

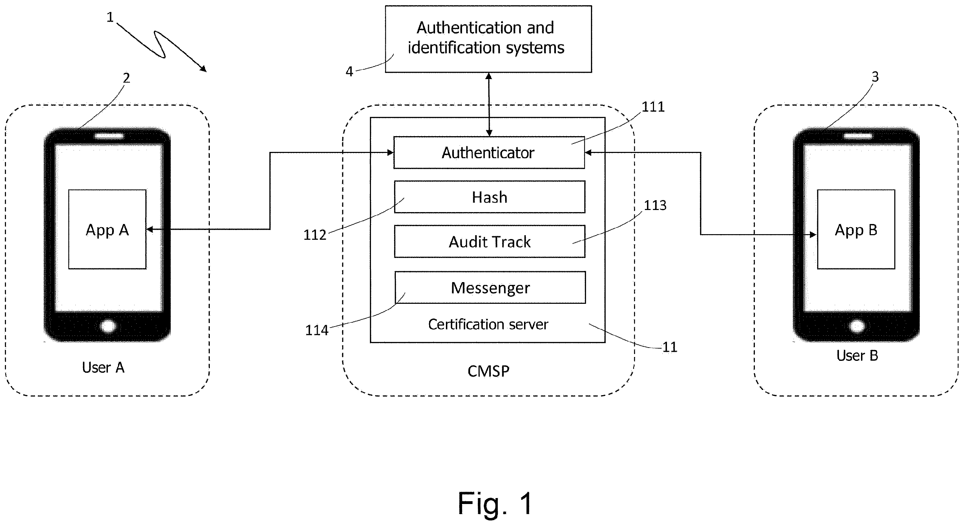

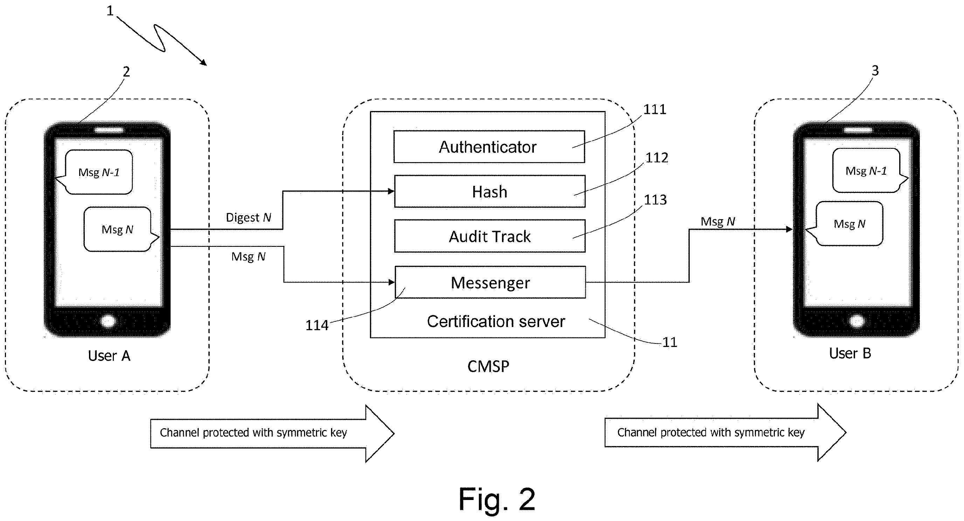

For a better understanding of the present invention, some preferred embodiments, provided purely by way of an explanatory and non-limiting example, will now be illustrated with reference to the accompanying drawings (not to scale), wherein Figures 1 and 2 schematically illustrate a certified messaging system according to a preferred embodiment of the present invention.

### DETAILED DESCRIPTION OF PREFERRED EMBODIMENTS OF THE INVENTION

The following description is provided to enable a person skilled in the art to make and use the invention. Various modifications to the embodiments presented will be immediately apparent to the person skilled in the art and the general principles described may be applied to other embodiments and applications while remaining within the scope of protection of the present invention, as defined in the appended claims.

The present invention should not therefore be considered limited to the embodiments described and shown, but given a broader scope of protection according to the principles and characteristics presented and defined in the appended claims.

The present invention relates, first of all, to a method for certifying an exchange of messages between at least two parties (which conveniently converse via a messaging system/service), wherein each message is exchanged:
- sending the message from a respective sender to a server, wherein said respective sender is
   - a first user using a first electronic communication device, or
   - a first intelligent software agent; and
- sending the message from the server to at least one respective recipient, wherein said respective recipient is
   - a second user using a second electronic communication device, or
   - a second intelligent software agent.

In addition, for each message exchanged, the respective sender also sends the server a corresponding digest calculated by applying a first predefined hash function to the message.

According to the present invention, the server stores the exchanged messages and the corresponding digests in the order in which said messages are exchanged.

In addition, the server, for each exchanged message, calculates a cumulative digest by applying a second predefined hash function
- to the digest corresponding to said message and
- to the digests corresponding to messages previously exchanged.

This way, the server is provided with the capability to certify the contents and the order of exchange of the messages. In fact, thanks to the storage by the server of the messages exchanged and the corresponding digests in the order in which said messages are exchanged and to the use of the cumulative digest, it is ensured that neither the contents of the exchanged messages, nor the order of exchange of the messages, nor the digests of the messages can be manipulated (for example, for fraudulent purposes). For the application of the second predefined hash function to the list of digests by the server, the method for the dynamic and secure management of an authenticated relational table in a database, described in the Applicant's international application WO 2008/035390 A2 can be conveniently used.

In the light of what has just been explained about the certification capability of the server, the server will hereinafter be called a certification server.

Conveniently, the certification server:
- stores a list of the digests corresponding to the messages exchanged updating said list of digests at each new exchanged message with the digest corresponding to said new exchanged message; and
- calculates, for each new exchanged message, a new cumulative digest by applying the second predefined hash function to the updated list of digests.

Conveniently, the certification server electronically signs the list of digests.

Preferably, the certification server identifies the parties that exchange messages; furthermore, for each exchanged message, the respective recipient sends the certification server:
- a receipt notification when the message is received; and
- a read notification when the message is read.

In addition, the certification server also stores:
- the identities of the parties exchanging messages; and
- time and date of sending, receiving and reading of the messages exchanged.

This way, the certification server is provided with the capability to certify also the identities of the parties exchanging the messages and the time and date of sending, receiving and reading the messages exchanged.

Conveniently, for each message exchanged, the respective sender sends the message and the corresponding digest to the certification server in encrypted form using a predefined encryption technology and the certification server sends the message to the respective recipient using said predefined encryption technology (which may, for example, be based on symmetric keys).

Preferably, the method further comprises: upon a request from the sender of a message, carrying out a first locking function that, when activated, does not allow the recipient to reply until the sender deactivates said first locking function.

Preferably, the method also comprises performing a second locking function that, when activated, does not allow a sender of a message to send another message until the reply from the recipient has been received.

Before proceeding with the description of the invention, it is important to specify that in the present document (and, therefore, within the scope of the present invention) the term "message" means any type of message or digital and/or multimedia content (e.g., a text message and/or audio and/or audio and/or video and/or an image, a photo, a video, an audio, a music file, a link, a geographical location, an electronic business card, a text document/file or even of another nature, etc.) that can be exchanged between two or more users, or between one or more users and one or more intelligent agents, or between two or more intelligent agents via a messaging system/service (e.g. SMS, e-mail, instant messaging, PEC messaging, etc.).

For a better understanding of the present invention, Figures 1 and 2 schematically illustrate an example of architecture of a certified messaging system (globally denoted by reference number 1) according to a preferred (but not binding, nor limiting) embodiment of the present invention.

Said certified messaging system 1 is owned, controlled and operated by a provider of a certified messaging service. In brief, said certified messaging service provider is indicated in Figures 1 and 2 and hereinafter in the description with the initials CMSP, abbreviation of "Certified Messaging Service Provider".

The certified messaging system 1 includes at least one certification server 11. Figures 1 and 2 show a single certification server 11 only, exclusively for ease of illustration. In fact, the certified messaging system 1 could conveniently include a plurality of certification servers 11.

Said certification server 11 is programmed to implement a plurality of logical modules, each of which is dedicated to a respective function. In particular, Figures 1 and 2 illustrate the following logical modules implemented, in use, by the certification server 11: an Authenticator module 111, a Hash module 112, an Audit Track module 113 and a Messenger module 114.

In addition, the certified messaging system 1 includes, for each user enabled to use the certified messaging service, a predefined software programme or a predefined App installed on a respective electronic communications device (e.g. a smartphone, a tablet, a laptop, a desktop computer, a smartTV, a smartwatch, etc.) of said user, wherein said respective electronic communications device is configured to allow said predefined programme/app to connect to, and communicate with, the certification server 11 in wireless and/or wired mode, through one or more telecommunication networks, preferably one or more Internet Protocol (IP) based networks, conveniently the Internet network (possibly, through one or more local, domestic, business, public, private networks, etc.). For example, said respective electronic communications device may conveniently be a smartphone, tablet or smartwatch using one or more of the following wireless communication technologies: GPRS, EDGE, HSPA, UMTS, LTE, LTE Advanced, Wi-Fi, WiMAX, etc.

In the example shown in Figures 1 and 2, a user A and a user B of the certified messaging system 1 use, respectively, a first smartphone 2 and a second smartphone 3 on which both have installed the predefined App of said certified messaging system 1 (in Figure 1, App A installed on the first smartphone 2 of the user A, App B installed on the second smartphone 3 of the user B).

Conveniently, the certified messaging system 1 may use stand-alone type programmes/apps, and/or SDK versions (acronym for the well-known English expression "Software Development Kit"), i.e. as module to be integrated on pre-existing non-certified traditional messaging systems (e.g. SMS, e-mail, instant messaging systems, etc.), or in add-on mode to the Applicant's applications/products.

More generally, the CMSP could conveniently be a provider of a non-certified messaging service that equips itself with the present invention to provide, upon request, also the certified messaging service according to the present invention. Otherwise, the CMSP could be a third party that, when required, provides the certified messaging service according to the present invention to certify messages exchanged via messaging systems/services of other providers.

The functioning of the certified messaging system 1 will be described in detail below.

In particular, an identification and registration step of the users is performed first. In the example shown in Figure 1, the users A and B directly use Apps A and B to perform identification and registration through the Authenticator module 111 of the certification server 11. According to an alternative embodiment of the invention, user identification and registration could also be performed through a CMSP website/internet portal using a web browser.

As illustrated in Figure 1, the authenticator module 111 is conveniently connected to identification and authentication systems 4 with which it communicates and cooperates in order to perform both the identification of users A and B and then, once completed the identification and registration of users A and B, also the authentication of the latter whenever they intend to use the certified messaging service provided by the system 1.

In order to identify a new user, different identification methods can be conveniently exploited, for example: the Italian Public Digital Identity System (SPID), the National Card of Services (CNS), the Electronic Identity Card issued by a State, public or private digital identity systems, de visu identification methods, identification based on video conferencing systems (such as, for example, the identification techniques described in the Italian patent No. 1418080 and in EP3455765), etc.

At the end of the identification process, the users A and B can choose, for subsequent access to the service, a computer authentication system already used previously (e.g. SPID), or choose to use a set of strong authentication credentials (e.g. identification with Electronic Identity Card and authentication with user-chosen credentials plus single-use passwords ("One Time Password" - OTP)), or even choose to use biometric-based authentication systems (fingerprint, facial imprint, voice, etc.). For user authentication, a single sign-on (SSO) mode integration with common authentication systems could also be conveniently used.

The authentication phase is performed whenever user A or B wants to use App A/B to utilise the certified messaging service. The authentication phase, carried out in cooperation with the Authenticator module 111 of the certification server 11, may involve the use of OTP (e.g. of push type, via SMS, physical or virtual token (i.e. App type), etc.).

Once the identification, registration (with relative acceptance of the contractual terms of the certified messaging service) and authentication have been performed, the Authenticator module 111 also registers smartphones 2 and 3 of users A and B and sends the Apps A and B a respective "seed" to initialize a respective pseudo-random number generator (PRNG) which generates the keys that will be used to encrypt communications with the certification server 11. At this stage, the user A can uniquely associate the first smartphone 2 with the App A and the user B can uniquely associate the second smartphone 3 with the App B.

When the user A wants to have a certified conversation with the user B, he opens the App A and authenticates himself, then the App A asks the user A (for example, via a graphical user interface) to choose the type of conversation desired: certified, or in standard mode wherein certification mechanisms are not provided.

If the user A chooses the certified mode, the App A allows the user A to exchange text messages and/or multimedia content (such as, for example, images, photos, videos, audio, music files, links, geographical locations, electronic business cards, documents/text files or even other types of files, etc.) with the user B through the certification server 11 which certifies the conversation.

In this regard, the App A could be conveniently configured to allow the user A to send his geographic location (conveniently calculated by the first smartphone 2 by means of a respective GNSS receiver (acronym of the well-known English expression "Global Navigation Satellite System"), for example of the GPS, GALILEO, GLONASS type, etc.) to the user B, advantageously implementing a certified geolocation method.

In particular, with reference to Figure 2, for each message that the user A wishes to send the user B during a certified conversation, the App A is configured to:
- apply a first predefined hash function (i.e. algorithm) to the message, thereby generating a corresponding digest; and
- send the certification server 11 the message and the corresponding digest in encrypted form (conveniently, using an encryption key generated by the respective PRNG).

The certification server 11 also includes a PRNG corresponding to that of the App A and initialized on the basis of the same seed, thus being able to decrypt the messages and corresponding digests received from the App A. The same applies to the App B. As a result, communications between the certification server 11 and the Apps A and B take place through respective communication channels protected by respective encryption techniques. Encryption and seed derivation mechanisms (i.e. of the "salt" type) such to ensure the security of the transmission channel may conveniently be used. Where present, keys can be conveniently historicized with a secure filing system.

In use, the Hash module 112 stores:
- a list (for example, in the form of an array) of digests that relate to messages exchanged by the users A and B during the certified conversation and that are sent to the certification server 11 by the Apps A and B together with the messages to which they refer; and
- a cumulative digest calculated by applying a second predefined hash function (i.e. algorithm) to said digest list (which may be equal to, or different from, the first predefined hash function).

In addition, for each new message and corresponding digest sent from App A to the certification server 11, the Hash module 112 is configured to:
- update the list of digests by including, in said list, the new digest received from App A; and
- applying said second predefined hash function to the updated list of digests, thus generating a corresponding new cumulative digest.

Preferably, the Hash module 112 is configured, each time the digest list is updated, to electronically sign the updated list (i.e. the relative file containing said updated list) and/or each new cumulative digest generated. To this end, the Hash module 112 may conveniently use a predefined Qualified Electronic Signature (QES) or Advanced Electronic Signature (AES) function, and/or a predefined Qualified Electronic Seal (QSEAL) or Advanced Electronic Seal (ASEAL) function, based on a public key infrastructure (PKI) or not. For example, the Hash module 112 could be conveniently configured to implement the advanced voice-based electronic signature method described in EP3316162.

In addition, for each new message and corresponding digest sent by the App A to the certification server 11, the Messenger module 114 is configured to send the App B said new message in encrypted form (conveniently, using an encryption key generated by the PRNG corresponding to that of the App B and initialized on the basis of the same seed).

In use, the Messenger module 114 stores:
- a list of messages exchanged by the users A and B during the certified conversation; and,
- for each message, a corresponding timestamp indicating the time and date the message was sent by the user A (i.e. by the App A), the time and date the message was received by the user B (i.e. by the App B) and the time and date the message was read by the user B.

In essence, the Messenger module 114 is the component that allows the uncoupling of the certification service from the messaging service.

Preferably, the Messenger module 114 is configured to interface with (and therefore use) various messaging systems (e.g. SMS, email, instant messaging, PEC, etc.). In particular, the Messenger module 114 could be conveniently configured to receive messages from the users A and B on one or more different messaging channels (SMS, e-mail, instant messaging, PEC, etc.), for example in the case in which the Apps A and B do not receive confirmation of receipt of a message sent to the certification server 11.

In addition, the Messenger module 114 may also be conveniently configured to send messages to the users A and B (and/or the relative notifications) using one or more different messaging channels (SMS, e-mail, instant messaging, PEC, etc.), for example in the case in which the certification server 111 does not receive confirmation of receipt and/or reading of a message sent to the App A or B.

In other words, the Messenger module 114 may conveniently be a multi-platform messaging module able to use various inbound channels and various outbound channels to send/receive messages and/or the relative notifications, so as to always ensure the exchange of messages between the users A and B.

Once the App B has received, from the Messenger module 114, a new message from the App A (i.e. from the user A) and the user B has received the relevant notification (e.g., a push notification and/or via SMS, email, etc.), said user B opens the App B and authenticates and proceeds with reading the message. Once the user B reads the message, the App B sends a related read notification to the Messenger module 114.

Of course, when the user A initiates a certified conversation with the user B, the user B must provide, via the App B, his/her consent to the certification of the conversation.

The user B can then respond to the user A messages using the same mechanisms described above for sending messages from the user A to the user B.

A certification session may terminate upon reaching a time out predefined or set by the user who initiated the certified conversation (in the example described above, the user A), or agreed by the two users (i.e., in the example of Figure 2, the users A and B).

In particular, at the end of a certification session, the Audit Track module 113 collects all the evidence generated (i.e., identity of the users A and B, the complete list of messages exchanged, time and date of sending, receiving and reading each message (timestamp), the complete list of digests relating to the messages exchanged and the cumulative digest generated for the last message exchanged in the certified conversation, or all the cumulative digests generated during the certified conversation) and sends such evidence to a secure documentary filing system. Conveniently, the data collected and sent for filing could be electronically signed by the Audit Track module 113 using a predefined QES/AES and/or QSEAL/ASEAL function, PKI-based or not.

In other words, the Audit Track module 113 is the module that allows, in the event of litigation or verification, access to the certified data stored by the certified messaging system 1. In particular, all the relevant data for certifying the transit, authenticity and integrity of the information and content exchanged are sent to one or more secure documentary filing systems and may be made available at the request of a user or an authority (e.g. the judicial authority).

Conveniently, the certified messaging system 1 logs out a user upon reaching a predefined time out or in response to an action of the user (e.g. an action indicative of the user's wish to disconnect from the certified messaging service).

It is important to note that, although until now the operation of the certified messaging system 1 has been described in relation to a certified conversation between two users only (e.g., the users A and B), said certified messaging system 1 can also be conveniently used, mutatis mutandis, to certify conversations between more than two users.

In addition, the certified messaging system 1 may also be conveniently exploited, mutatis mutandis, to certify conversations between one or more human users and one or more intelligent agents configured to hold intelligent conversations with humans (e.g., for remote assistance purposes, for the provision of information/data automatically and/or for commercial purposes).

Lastly, the certified messaging system 1 could also be advantageously exploited, mutatis mutandis, to certify conversations between two or more intelligent agents configured to hold conversations with each other.

Preferably, the certified messaging system 1 can be configured to perform a first locking function which, if activated by the sender of a message, does not allow the recipient to respond until the sender has deactivated said first locking function. For example, said first locking function may be useful if a sender wants to send a sequence of messages without the risk of the recipient responding before the sender has finished sending all the messages.

Again preferably, the certified messaging system 1 can also be configured to perform a second locking function which, if activated, does not allow a user who has just sent a message to send additional messages until he/she has received the other user's response.

These locking functions allow users to manage the order in which messages are exchanged within the same conversation, keeping them in order.

With reference to what is illustrated in Figures 1 and 2, the request to the users A and B to activate or not the first locking function and/or the second locking function, as well as the implementation of said first/second locking function (when activated) are tasks conveniently entrusted to the Apps A and B.

In addition, the Apps A and B could conveniently be equipped with a document composition module that allows the users A and B to dynamically compose computer documents associated with the exchange of information based on an agreed metadata set. The computer documents thus created can then be offered to users (natural persons) for acceptance and signing with electronic signature, qualified electronic signature or advanced electronic signature.

In addition, the certification server 11 and the Apps A and B may also be conveniently provided with a signature module allowing the electronic signature, or via a QES or AES solution, of a file produced by the certification server 11 or sent by a user (natural person or intelligent agent). For example, for this purpose, the advanced voice-based electronic signature method described in EP3316162 could be conveniently used.

The certified messaging system 1 and, more generally, the method, system and certification service according to the present invention can be advantageously exploited in various applications, for example to certify messages exchanged, via a messaging system, between:
- pilots and air traffic controllers;
- a user in need of assistance and a provider of a remote assistance service (in this case, the second party may conveniently be a human operator or an intelligent agent), for example for the maintenance/repair of devices/systems (such as radar, communication systems, measurement systems, etc.) installed in inaccessible or difficult to access places (e.g. on board a ship in the middle of an ocean, in a scientific/military base located in Antarctica, etc.); and
- remote users and suppliers of tangible and/or intangible products and/or services (e.g., physical or virtual stores, banks, insurance companies, hotels, travel agencies, transport companies, etc.).

In particular, in the latter case the present invention could be advantageously exploited:
- for financial advisory purposes (e.g. as a means of communication between a financial advisor and a client for getting the client's consent to investment proposals);
- as part of sales processes (for example, for communications between a company's sales department and a customer to agree to contractual changes);
- as part of an approval processes (for example, for agreeing to changes to documents that need to be signed electronically);
- in the health sector (for example, for the secure exchange of information between doctors and patients); in particular, the present invention could be advantageously integrated into information systems that allow patients to interact with doctors and/or manage/consult their electronic health records;
- in the insurance sector (for example, for signing and/or for after-sales management of insurance policies).

From the above description the countless technical advantages of the present invention are immediately apparent.

In particular, it is important to emphasize that the present invention makes it possible to certify in a truly effective manner the exchange of messages between two or more users, or between one or more users and one or more intelligent agents, or between two or more intelligent agents. In particular, the present invention makes it possible to effectively certify the identity of those who exchange messages via a messaging system/service, the integrity of the content exchanged, the date and time of sending, receiving and reading messages, as well as the exact order of sending exchanged messages.

In more detail, it is important to note that the present invention makes it possible to:
- concatenate the exchange of textual and/or multimedia information content (e.g. images, photos, videos, audio, music files, links, geographical locations, electronic business cards, text documents or even other documents, etc.) by calculating a digest of each content, thus certifying the integrity of the content exchanged between two or more users (or between a user and an intelligent agent, or between two or more intelligent agents);
- certify the order in which messages are sent in a conversation, thanks to the cumulative digest calculation which, as explained above, concatenates the digest of each new message sent with those of the previous messages;
- certify by timestamp the date and time of sending, receiving and reading each message exchanged;
- send an entire conversation and related evidence for secure digital filing (subject to agreement between the parties, when natural persons); and
- produce on request (e.g. in the context of judicial proceedings) a document certifying the integrity and concatenation, in which the CMSP presents all the evidence gathered in relation to a conversation.

Further advantages of the present invention are:
- high communication speed between subjects requiring certified messaging;
- simple, fast, secure alternative to exchange via PEC or email;
- integrability in PEC platforms, with the aim of extending their functionality;
- possibility of certifying the solution according to the present invention as a qualified delivery service in accordance with the eIDAS (Electronic IDentification Authentication and Signature) Regulation - European Union Regulation (EU) No. 910/2014 on digital identity and trust services.

In conclusion, it is clear that various modifications may be made to the present invention, all falling within the scope of protection of the invention as defined in the appended claims.

## Claims

1. A method for certifying messages exchanged between two or more parties (User A, User B) through a messaging system, wherein each message is exchanged:
• sending the message from a respective sender to a certification server (11), wherein said respective sender is
- a first user (User A) using a first electronic communication device (2), or
- a first intelligent software agent; and
• sending the message from the certification server (11) to at least one respective recipient, wherein said respective recipient is
- a second user (User B) using a second electronic communication device (3), or
- a second intelligent software agent;
wherein, for each exchanged message, the respective sender also sends the certification server (11) a corresponding digest calculated by applying a first predefined hash function to the message;
wherein the certification server (11) stores the exchanged messages and a list of the digests corresponding to the exchanged messages;
**characterized in that** the certification server (11):
• stores the exchanged messages and the corresponding digests in the order in which the messages are exchanged; and,
• for each exchanged message,
- updates the list of digests with the digest corresponding to said exchanged message, whereby the updated list of digests includes the digest corresponding to said exchanged message and the digests corresponding to messages previously exchanged, and
- calculates a cumulative digest by applying a second predefined hash function to the updated list of digests;
whereby the certification server (11) is provided with capability to certify contents and order of exchange of the messages.

2. The method of claim 1, wherein the certification server (11) electronically signs the list of digests.

3. The method according to claim 1 or 2, wherein the certification server (11) identifies the parties (User A, User B) that exchange the messages; wherein, for each exchanged message, the respective recipient sends the certification server (11):
• a receipt notification when the message is received; and
• a read notification when the message is read;
and wherein the certification server (11) also stores:
• the identities of the parties (User A, User B) exchanging messages; and
• time and date of sending, receiving and reading the exchanged messages;
whereby said certification server (11) is provided with capability to certify also the identities of the parties (User A, User B) exchanging the messages and the time and date of sending, receiving and reading the exchanged messages.

4. The method according to any claim 1-3, wherein for each exchanged message:
• the respective sender sends the message and the corresponding digest to the certification server (11) in encrypted form using a predefined encryption technology; and
• the certification server (11) sends the message to the respective recipient using said predefined encryption technology.

5. The method according to any preceding claim, further comprising: upon a request from the sender of a message, carry out a first locking function that, when activated, does not allow the recipient to reply until the sender deactivates said first locking function.

6. The method according to any preceding claim, further comprising carrying out a second locking function that, when activated, does not allow a sender of a message to send another message until the reply from the recipient has been received.

7. A certification server (11) configured to carry out the method as claimed in any preceding claim for certifying messages exchanged between two or more parties (User A, User B) through a messaging system, wherein each message is exchanged by sending the message from a respective sender to said certification server (11), wherein said respective sender is a first user (User A) using a first electronic communication device (2) or a first intelligent software agent;
wherein, for each exchanged message, the respective sender also sends the certification server (11) a corresponding digest calculated by applying a first predefined hash function to the message;
wherein the certification server (11) is configured to:
• store the exchanged messages and a list of the digests corresponding to the exchanged messages in the order in which the messages are exchanged; and,
• for each exchanged message,
- send the message received from the respective sender to at least one respective recipient, wherein said respective recipient is a second user (User B) using a second electronic communication device (3) or a second intelligent software agent,
- update the list of digests with the digest corresponding to said exchanged message, whereby the updated list of digests includes the digest corresponding to said exchanged message and the digests corresponding to messages previously exchanged, and
- calculate a cumulative digest by applying a second predefined hash function to the updated list of digests;
whereby the certification server (11) is provided with capability to certify contents and order of exchange of the messages.

8. The certification server of claim 7, further configured to electronically sign the list of digests.

9. The certification server according to claim 7 or 8, further configured to identify the parties (User A, User B) that exchange the messages; wherein, for each exchanged message, the respective recipient sends the certification server (11):
• a receipt notification when the message is received; and
• a read notification when the message is read;
the certification server (11) being further configured to store:
• the identities of the parties (User A, User B) exchanging the messages; and
• time and date of sending, receiving and reading of the exchanged messages;
whereby said certification server (11) is provided with capability to certify also the identities of the parties (User A, User B) exchanging the messages and the time and date of sending, receiving and reading the exchanged messages.

## Patentansprüche

1. Verfahren zum Zertifizieren von Nachrichten, die zwischen zwei oder mehreren Parteien (User A, User B) über ein Mitteilungs- bzw. Nachrichtensystem ausgetauscht werden, wobei jede Nachricht ausgetauscht wird:
• Senden der Nachricht von einem jeweiligen Sender an einen Zertifizierungsserver (11), wobei der jeweilige Sender
- ein erster Benutzer (User A) ist, der ein erstes elektronisches Kommunikationsgerät (2) verwendet, oder
- ein erster intelligenter Software-Agent ist; und
• Senden der Nachricht von dem Zertifizierungsserver (11) an mindestens einen jeweiligen Empfänger, wobei der jeweilige Empfänger
- ein zweiter Benutzer (User B) ist, der ein zweites elektronisches Kommunikationsgerät (3) verwendet, oder
- ein zweiter intelligenter Software-Agent ist;
wobei für jede ausgetauschte Nachricht der jeweilige Sender auch einen dazugehörigen Digest bzw. Hashwert an den Zertifizierungsserver (11) sendet, der durch Anwenden einer ersten vordefinierten Hashfunktion auf die Nachricht berechnet wird;
wobei der Zertifizierungsserver (11) die ausgetauschten Nachrichten und eine Liste der den ausgetauschten Nachrichten zugehörigen Digests speichert;
**dadurch gekennzeichnet, dass** der Zertifizierungsserver (11):
• die ausgetauschten Nachrichten und die dazugehörigen Digests in der Reihenfolge speichert, in der die Nachrichten ausgetauscht werden; und
• für jede ausgetauschte Nachricht
- die Digestliste mit dem der ausgetauschten Nachricht zugehörigen Digest aktualisiert, wodurch die aktualisierte Digestliste den der ausgetauschten Nachricht zugehörigen Digest und die den vorher ausgetauschten Nachrichten zugehörigen Digests enthält, und
- einen kumulierten Digest bzw. Hashwert durch Anwenden einer zweiten vordefinierten Hashfunktion auf die aktualisierte Digestliste berechnet;
wodurch dem Zertifizierungsserver (11) die Fähigkeit bereitgestellt ist, Inhalte und Reihenfolge des Nachrichtenaustauschs zu zertifizieren.

2. Verfahren nach Anspruch 1, wobei der Zertifizierungsserver (11) die Digestliste elektronisch signiert.

3. Verfahren nach Anspruch 1 oder 2, wobei der Zertifizierungsserver (11) die Parteien (User A, User B) identifiziert, die die Nachrichten austauschen; wobei für jede ausgetauschte Nachricht der jeweilige Empfänger dem Zertifizierungsserver (11) sendet:
• eine Empfangsbenachrichtigung, wenn bzw. wann die Nachricht empfangen wurde;
und
• eine Gelesen-Benachrichtigung, wenn bzw. wann die Nachricht gelesen wurde; und wobei der Zertifizierungsserver (11) außerdem speichert:
• die Identitäten der Parteien (User A, User B), die Nachrichten austauschen; und
• Zeit und Datum des Sendens, Empfangens und Lesens der ausgetauschten Nachrichten;
wodurch dem Zertifizierungsserver (11) die Fähigkeit bereitgestellt ist, auch die Identitäten der Parteien (User A, User B), die die Nachrichten austauschen, und die Zeit und das Datum des Sendens, Empfangens und Lesens der ausgetauschten Nachrichten zu zertifizieren.

4. Verfahren nach einem der Ansprüche 1-3, wobei für jede ausgetauschte Nachricht:
• der jeweilige Sender die Nachricht und den dazugehörigen Digest in verschlüsselter Form unter Verwendung einer vordefinierten Verschlüsselungstechnologie an den Zertifizierungsserver (11) sendet; und
• der Zertifizierungsserver (11) die Nachricht an den jeweiligen Empfänger unter Verwendung der vordefinierten Verschlüsselungstechnologie sendet.

5. Verfahren nach einem der vorhergehenden Ansprüche, ferner umfassend: auf Anfrage des Senders einer Nachricht Ausführen einer ersten Sperrfunktion, die bei Aktivierung dem Empfänger nicht erlaubt, zu antworten, bis der Sender die erste Sperrfunktion entsperrt.

6. Verfahren nach einem der vorhergehenden Ansprüche, ferner umfassend das Ausführen einer zweiten Sperrfunktion, die bei Aktivierung einem Sender einer Nachricht nicht erlaubt, eine weitere Nachricht zu senden, bis die Antwort des Empfängers empfangen wurde.

7. Zertifizierungsserver (11), derart ausgelegt, das Verfahren nach einem der vorhergehenden Ansprüche zum Zertifizieren von Nachrichten, die zwischen zwei oder mehreren Parteien (User A, User B) über ein Mitteilungs- bzw. Nachrichtensystem ausgetauscht werden, wobei jede Nachricht durch Senden der Nachricht von einem jeweiligen Sender an den Zertifizierungsserver (11) ausgetauscht wird wobei der jeweilige Sender ein erster Benutzer (User A), der ein erstes elektronisches Kommunikationsgerät (2) verwendet, oder ein erster intelligenter Software-Agent ist;
wobei für jede ausgetauschte Nachricht der jeweilige Sender auch einen dazugehörigen Digest bzw. Hashwert an den Zertifizierungsserver (11) sendet, der durch Anwenden einer ersten vordefinierten Hashfunktion auf die Nachricht berechnet wird;
wobei der Zertifizierungsserver (11) ausgelegt ist:
• die ausgetauschten Nachrichten und eine Liste der zu den ausgetauschten Nachrichten gehörigen Digests in der Reihenfolge, in der die Nachrichten ausgetauscht wurden, zu speichern; und
• für jede ausgetauschte Nachricht
- die von dem jeweiligen Sender empfangene Nachricht an mindestens einen jeweiligen Empfänger zu senden, wobei der jeweilige Empfänger ein zweiter Benutzer (User B), der ein zweites elektronisches Kommunikationsgerät (3) verwendet, oder ein zweiter intelligenter Software-Agent ist,
- die Digestliste mit dem der ausgetauschten Nachricht zugehörigen Digest zu aktualisieren, wodurch die aktualisierte Digestliste den der ausgetauschten Nachricht zugehörigen Digest und die den vorher ausgetauschten Nachrichten zugehörigen Digests enthält, und
- einen kumulierten Digest bzw. Hashwert durch Anwenden einer zweiten vordefinierten Hashfunktion auf die aktualisierte Digestliste zu berechnen;
wodurch dem Zertifizierungsserver (11) die Fähigkeit bereitgestellt ist, Inhalte und Reihenfolge des Nachrichtenaustauschs zu zertifizieren.

8. Zertifizierungsserver nach Anspruch 7, ferner darauf ausgelegt, die Digestliste elektronisch zu signieren.

9. Zertifizierungsserver nach Anspruch 7 oder 8, ferner ausgelegt, die Parteien (User A, User B) zu identifizieren, die die Nachrichten austauschen; wobei für jede ausgetauschte Nachricht der jeweilige Empfänger dem Zertifizierungsserver (11) sendet:
• eine Empfangsbenachrichtigung, wenn bzw. wann die Nachricht empfangen wurde;
und
• eine Gelesen-Benachrichtigung, wenn bzw. wann die Nachricht gelesen wurde; wobei der Zertifizierungsserver (11) außerdem darauf ausgelegt ist, zu speichern:
• die Identitäten der Parteien (User A, User B), die die Nachrichten austauschen; und
• Zeit und Datum des Sendens, Empfangens und Lesens der ausgetauschten Nachrichten;
wodurch dem Zertifizierungsserver (11) die Fähigkeit bereitgestellt ist, die Identitäten der Parteien (User A, User B), die die Nachrichten austauschen, und die Zeit und das Datum des Sendens, Empfangens und Lesens der ausgetauschten Nachrichten zu zertifizieren.

## Revendications

1. Procédé pour certifier des messages échangés entre deux parties ou plus (Utilisateur A, Utilisateur B) par l'intermédiaire d'un système de messagerie, dans lequel chaque message est échangé :
• en envoyant le message d'un expéditeur respectif à un serveur de certification (11), où ledit expéditeur respectif est
- un premier utilisateur (Utilisateur A) utilisant un premier dispositif de communication électronique (2), ou
- un premier agent logiciel intelligent ; et
• en envoyant le message du serveur de certification (11) à au moins un destinataire respectif, où ledit destinataire respectif est
- un second utilisateur (Utilisateur B) utilisant un second dispositif de communication électronique (3), ou
- un second agent logiciel intelligent ;
dans lequel, pour chaque message échangé, l'expéditeur respectif envoie également au serveur de certification (11) un condensé correspondant calculé en appliquant une première fonction de hachage prédéfinie au message ;
dans lequel le serveur de certification (11) stocke les messages échangés et une liste des condensés correspondant aux messages échangés ;
**caractérisé en ce que** le serveur de certification (11) :
• stocke les messages échangés et les condensés correspondants dans l'ordre dans lequel les messages sont échangés ; et,
• pour chaque message échangé,
- met à jour la liste de condensés avec le condensé correspondant audit message échangé, moyennant quoi la liste de condensés mise à jour inclut le condensé correspondant audit message échangé et les condensés correspondant aux messages échangés précédemment, et
- calcule un condensé cumulatif en appliquant une seconde fonction de hachage prédéfinie à la liste de condensés mise à jour ;
moyennant quoi le serveur de certification (11) est pourvu d'une capacité à certifier des contenus et un ordre d'échange des messages.

2. Procédé selon la revendication 1, dans lequel le serveur de certification (11) signe électroniquement la liste de condensés.

3. Procédé selon la revendication 1 ou 2, dans lequel le serveur de certification (11) identifie les parties (Utilisateur A, Utilisateur B) qui échangent les messages; dans lequel, pour chaque message échangé, le destinataire respectif envoie au serveur de certification (11) :
• une notification de réception lorsque le message est reçu ; et
• une notification de lecture lorsque le message est lu ;
et dans lequel le serveur de certification (11) stocke également :
• les identités des parties (Utilisateur A, Utilisateur B) échangeant des messages ; et
• une heure et une date d'envoi, de réception et de lecture des messages échangés;
moyennant quoi ledit serveur de certification (11) est pourvu d'une capacité à certifier également les identités des parties (Utilisateur A, Utilisateur B) échangeant les messages et l'heure et la date d'envoi, de réception et de lecture des messages échangés.

4. Procédé selon l'une quelconque des revendications 1 à 3, dans lequel pour chaque message échangé :
• l'expéditeur respectif envoie le message et le condensé correspondant au serveur de certification (11) sous forme chiffrée en utilisant une technologie de chiffrement prédéfinie ; et
• le serveur de certification (11) envoie le message au destinataire respectif en utilisant ladite technologie de chiffrement prédéfinie.

5. Procédé selon une quelconque revendication précédente, comprenant en outre : lors d'une demande en provenance de l'expéditeur d'un message, l'exécution d'une première fonction de verrouillage qui, lorsqu'elle est activée, ne permet pas au destinataire de répondre tant que l'expéditeur ne désactive pas ladite première fonction de verrouillage.

6. Procédé selon une quelconque revendication précédente, comprenant en outre l'exécution d'une seconde fonction de verrouillage qui, lorsqu'elle est activée, ne permet pas à un expéditeur d'un message d'envoyer un autre message tant que la réponse en provenance du destinataire n'a pas été reçue.

7. Serveur de certification (11) configuré pour exécuter le procédé tel que revendiqué dans une quelconque revendication précédente pour certifier des messages échangés entre deux parties ou plus (Utilisateur A, Utilisateur B) par l'intermédiaire d'un système de messagerie, dans lequel chaque message est échangé en envoyant le message d'un expéditeur respectif audit serveur de certification (11), où ledit expéditeur respectif est un premier utilisateur (Utilisateur A) utilisant un premier dispositif de communication électronique (2) ou un premier agent logiciel intelligent ;
dans lequel, pour chaque message échangé, l'expéditeur respectif envoie également au serveur de certification (11) un condensé correspondant calculé en appliquant une première fonction de hachage prédéfinie au message ;
dans lequel le serveur de certification (11) est configuré pour :
• stocker les messages échangés et une liste des condensés correspondant aux messages échangés dans l'ordre dans lequel les messages sont échangés ; et,
• pour chaque message échangé,
- envoyer le message reçu en provenance de l'expéditeur respectif à au moins un destinataire respectif, où ledit destinataire respectif est un second utilisateur (Utilisateur B) utilisant un second dispositif de communication électronique (3) ou un second agent logiciel intelligent,
- mettre à jour la liste de condensés avec le condensé correspondant audit message échangé, moyennant quoi la liste de condensés mise à jour inclut le condensé correspondant audit message échangé et les condensés correspondant aux messages échangés précédemment, et
- calculer un condensé cumulatif en appliquant une seconde fonction de hachage prédéfinie à la liste de condensés mise à jour ;
moyennant quoi le serveur de certification (11) est pourvu d'une capacité à certifier des contenus et un ordre d'échange des messages.

8. Serveur de certification selon la revendication 7, en outre configuré pour signer électroniquement la liste de condensés.

9. Serveur de certification selon la revendication 7 ou 8, en outre configuré pour identifier les parties (Utilisateur A, Utilisateur B) qui échangent les messages ; dans lequel, pour chaque message échangé, le destinataire respectif envoie au serveur de certification (11) :
• une notification de réception lorsque le message est reçu ; et
• une notification de lecture lorsque le message est lu ;
le serveur de certification (11) étant en outre configuré pour stocker :
• les identités des parties (Utilisateur A, Utilisateur B) échangeant les messages ; et
• une heure et une date d'envoi, de réception et de lecture des messages échangés;
moyennant quoi ledit serveur de certification (11) est pourvu d'une capacité à certifier également les identités des parties (Utilisateur A, Utilisateur B) échangeant les messages et l'heure et la date d'envoi, de réception et de lecture des messages échangés.
